(19)

Europäisches
Patentamt

European
Patent Office

Office européen
des brevets

(11) **EP 4 559 757 A1**

(12) **EUROPEAN PATENT APPLICATION**
published in accordance with Art. 153(4) EPC

(43) Date of publication:
**28.05.2025 Bulletin 2025/22**

(21) Application number: 23929858.1

(22) Date of filing: **26.09.2023**

(51) International Patent Classification (IPC):
***B60R 11/02*** (2006.01)      ***B60N 2/02*** (2006.01)
***B60J 3/02*** (2006.01)

(86) International application number:
**PCT/CN2023/121345**

(87) International publication number:
**WO 2024/198284 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.03.2023   CN 202310317152**

(71) Applicant: **Deepal Automobile Nanjing Research
Institute Co., Ltd.
Nanjing, Jiangsu 211215 (CN)**

(72) Inventors:
• **SU, Zhong
Chongqing 401135 (CN)**

• **HU, Zhiqiang
Chongqing 401135 (CN)**
• **LIU, Jie
Chongqing 401135 (CN)**
• **ZENG, Shuai
Chongqing 401135 (CN)**
• **ZHAI, Jun
Chongqing 401135 (CN)**

(74) Representative: **2K Patentanwälte Blasberg
Kewitz & Reichel
Partnerschaft mbB
Schumannstrasse 27
60325 Frankfurt am Main (DE)**

(54) **METHOD AND SYSTEM FOR CONTROLLING AVOIDANCE MODE OF VEHICLE
FRONT-PASSENGER-SEAT SCREEN, VEHICLE, AND STORAGE MEDIUM**

(57)    A method for controlling an avoidance mode of a vehicle front-passenger-seat screen, comprising: when a front-passenger-seat screen is in an unfolded state, controlling an avoidance mode of the front-passenger-seat screen to be in an on-standby state, and upon detecting that a vehicle door is opened and recognizing that a passenger on the front passenger seat has an intention to get off the vehicle or recognizing that a passenger has an intention to enter the front passenger seat, activating the avoidance mode of the front-passenger-seat screen, and controlling the front-passenger-seat screen to move towards the front windshield (7) side to an avoidance position; and when the front-passenger-seat screen is in the avoidance mode, in response to detecting that a front passenger side door is in a closed state, controlling the front-passenger-seat screen to move to the position before the avoidance mode is activated, exiting the avoidance mode, and entering the state in which the avoidance mode is on standby. Also disclosed are a system comprising the control method, a vehicle, and a storage medium. When a user enters or walks out the front passenger seat position, the present invention controls the front-passenger-seat screen to rotate towards the front windshield (7) side, so as to achieve the purpose of protecting the safety of passengers on the front passenger seat and the front-passenger-seat screen.

EP 4 559 757 A1

```
                              ┌─────────────┐
                              │    Start    │
                              └──────┬──────┘
                                     │
                                     ▼
              ┌──────────────────────────────────────────────┐
              │  Detect a state of a front-passenger-seat    │◄───────┐
              │                 display                      │        │
              └──────────────────────┬───────────────────────┘        │
                                     │                                 │
                                     ▼                              No │
                      ╱─────────────────────────────╲                 │
                     ╱          Whether the           ╲                │
                    ╱  front-passenger-seat display is  ╲──────────────┘
                    ╲           in an unfolded state    ╱
                     ╲                                 ╱
                      ╲─────────────────────────────╱
                                     │
                                    Yes
                                     ▼
              ┌──────────────────────────────────────────────┐
              │   A courtesy mode is in an enabled and        │◄───────┐
              │              standby state                    │        │
              └──────────────────────┬───────────────────────┘        │
                                     │                                 │
                                     ▼                              No │
                      ╱─────────────────────────────╲                 │
                     ╱          Whether a             ╲                │
                    ╱    front-passenger's side vehicle ╲──────────────┘
                    ╲           door is opened         ╱
                     ╲                                 ╱
                      ╲─────────────────────────────╱
                                     │
                                    Yes
                                     ▼
              ┌──────────────────────────────────────────────┐
              │   Detect a state of a person on a front       │
              │              passenger seat                   │
              └──────────────────────┬───────────────────────┘
                                     │
                                     ▼
```

Is there a person on the front passenger seat

Yes → Intention to get off

No → Intention to get on

The front-passenger-seat display moves toward a front windshield side to be in a courtesy position

Whether the front-passenger's side vehicle door is opened

Yes

No → Control the front-passenger-seat display to rotate back to a position before the courtesy mode is entered

End

FIG. 1

**Description**

TECHNICAL FIELD

The present invention relates to the field of vehicle intelligent control technologies, and in particular, to a method and system for controlling avoidance mode of vehicle front-passenger-seat screen, vehicle, and storage medium.

BACKGROUND

As a user imposes a higher intelligence requirement, a convenient and intelligent cabin is more preferred by the user. A vehicle cabin becomes a leisure and entertainment place for the user in most cases. Creating an intelligent cabin for scenario-based design has gradually become a vehicle highlight, significantly enhancing the user's vehicle use experience.

For example, a patent document CN110316114B discloses a vehicle, a vehicle-mounted display terminal system, and a control method therefor. The vehicle-mounted display terminal system includes: a display terminal; an execution mechanism, configured to adjust the display terminal; a receiving module, configured to receive a user instruction; and a control module. The control module is configured to: control, based on the user instruction, the vehicle-mounted display terminal system to enter a front-passenger entertainment mode; after the vehicle-mounted display terminal system enters the front-passenger entertainment mode, control, by using the execution mechanism, the display terminal to be in a preset state; obtain angle information of the display terminal corresponding to the front-passenger entertainment mode, and control, based on the angle information by using the execution mechanism, the display terminal to rotate by a corresponding angle, to face a front passenger seat position. Where the display terminal of the system is a central control screen, and the display terminal is controlled to be switched to a landscape mode to facilitate watching by the front passenger when a front passenger starts the front-passenger entertainment mode. In this manner, viewing of navigation or other information by the driver is affected, and a watching angle of the front passenger is not optimal. To resolve the foregoing problems, it is creatively proposed that a front-passenger-seat display is capable of being rotatably disposed on a roof of a vehicle front-passenger's side. However, this arrangement manner affects getting on/off of the front passenger.

Therefore, it is necessary to develop a vehicle front-passenger-seat display courtesy mode control method and system, a vehicle, and a storage medium.

SUMMARY

The present invention aims to provide a vehicle front-passenger-seat display courtesy mode control method and system, a vehicle, and a storage medium. When a user takes a front passenger seat or leaves a front passenger seat position, a front-passenger-seat display can be controlled to rotate toward a front windshield side, to protect safety of a front passenger and the front-passenger-seat display.

According to a first aspect, the present invention provides a vehicle front-passenger-seat display courtesy mode control method. A front-passenger-seat display is capable of being rotatably disposed on a roof of a vehicle front-passenger's side, the front-passenger-seat display has a courtesy mode, and the method includes the following steps:

when the front-passenger-seat display is in an unfolded state, controlling the courtesy mode of the front-passenger-seat display to be in an enabled and standby state; and when it is detected that a vehicle door is opened and it is identified that a front passenger has an intention to get off or a passenger has an intention to take a front passenger seat, activating the courtesy mode of the front-passenger-seat display, and controlling the front-passenger-seat display to move toward a front windshield side to be in an avoidance position; and

when the front-passenger-seat display is in the courtesy mode, in response to detecting that the front-passenger's side vehicle door is in a closed state, controlling the front-passenger-seat display to move to a position before the courtesy mode is activated, exiting the courtesy mode, and entering a state in which the courtesy mode is in the enabled and standby state.

Optionally, the avoidance position has a maximum unfolding angle $\beta_{max}$ of the front-passenger-seat display, to prevent the front passenger from bumping against the front-passenger-seat display.

According to a second aspect, the present invention provides a vehicle front-passenger-seat display courtesy mode control system, including:

a front-passenger-seat display, where the front-passenger-seat display has a courtesy mode, and the front-passenger-seat display is capable of being rotatably disposed on a roof of a vehicle front-passenger's side;
a vehicle door assembly, configured to output vehicle door status information;
a human body detection module, configured to detect whether there is a person on a front passenger seat; and
a controller, where the controller is separately connected to the front-passenger-seat display, the vehicle door assembly, and the human body detection module.

The controller can perform the steps of the vehicle front-passenger-seat display courtesy mode control method according to the present invention.

According to a third aspect, the present invention provides a vehicle, using the vehicle front-passenger-seat display courtesy mode control system according to the present invention.

According to a fourth aspect, the present invention provides a storage medium. The memory stores a computer-readable program, and when the computer-readable program is invoked, the steps of the vehicle front-passenger-seat display courtesy mode control method according to the present invention can be performed.

Beneficial effects of the present invention are as follows:

(1) When a user takes a front passenger seat or leaves a front passenger seat position, a front-passenger-seat display is controlled to rotate toward a front windshield side, to protect safety of a front passenger and the front-passenger-seat display. After the front passenger completely leaves the front passenger seat, the front-passenger-seat display is controlled to return to a position before a courtesy mode is entered, to facilitate watching by the front passenger, thereby improving intelligence of a vehicle.

(2) The front-passenger-seat display is capable of being rotatably disposed on a roof of a vehicle front-passenger's side. When the front-passenger-seat display is in a folded state, the front-passenger-seat display is almost parallel to the roof of the vehicle, to reduce occupation of internal space of the vehicle. When the front-passenger-seat display is in an unfolded state, the front-passenger-seat display and the roof of the vehicle form a specific included angle, to implement sun shading. A sun shading function and an audio/video display function are completed by using only one front-passenger-seat display. In this way, structural integration and function maximization are implemented, and user experience is improved.

BRIEF DESCRIPTION OF DRAWINGS

FIG. 1 is a flowchart of controlling a courtesy mode according to an embodiment;
FIG. 2 is a flowchart of controlling a TV mode according to an embodiment;
FIG. 3 is a block diagram of a principle according to Embodiment 1;
FIG. 4 is a block diagram of a principle according to Embodiment 2;
FIG. 5 is a diagram of a principle of calculating a target rotation angle a2 of a front-passenger-seat display according to an embodiment;

FIG. 6 is a schematic structural diagram in which a front-passenger-seat display is connected to a vehicle front roof crossmember according to an embodiment;
FIG. 7 is a schematic structural diagram in which a front-passenger-seat display, a vehicle front roof crossmember, and a front windshield fit each other according to an embodiment;
FIG. 8 is a schematic exploded diagram of the front-passenger-seat display according to an embodiment;
FIG. 9 is a schematic structural diagram of the rotating mechanism according to an embodiment;
FIG. 10 is a schematic diagram of a partial cross-section of the rotating mechanism according to an embodiment;
FIG. 11 is a schematic structural diagram of the right sleeve and a slave pin boss according to an embodiment; and
FIG. 12 is a schematic structural diagram of the slave pin boss according to an embodiment.

In the figures: 1: Module base; 11: Mounting structure; 2: Rotating mechanism; 21: Master pin boss; 22: Slave pin boss; 221: Rotation limiting groove; 222: Slave mounting hole; 23: Motor; 24: Gear box; 25: Main shaft; 26: Damper; 27: Mechanism housing; 271: Left sleeve; 272: Middle sleeve; 273: Right sleeve; 2731: Right-side rotating shaft; 2732: Rotation limiting member; 2733: Harness via; 274: Mounting lug; 28: Circuit board; 3: Display; 31: Specular reflection film; 4: Module housing; 41: Avoidance groove; 5: Decorative panel; 6: Vehicle front roof crossmember; and 7: Front windshield.

DESCRIPTION OF EMBODIMENTS

The following describes implementations of the technical solutions of the present invention with reference to accompanying drawings and preferred embodiments. A person skilled in the art can easily understand other advantages and effects of the present invention based on content disclosed in this specification. The present invention may be further implemented or applied by using other different specific implementations. Various details in this specification may also be modified or altered based on different viewpoints and applications without departing from the present invention. It should be understood that the preferred embodiments are merely intended to describe the present invention, and are not intended to limit the protection scope of the present invention.

**Embodiment 1**

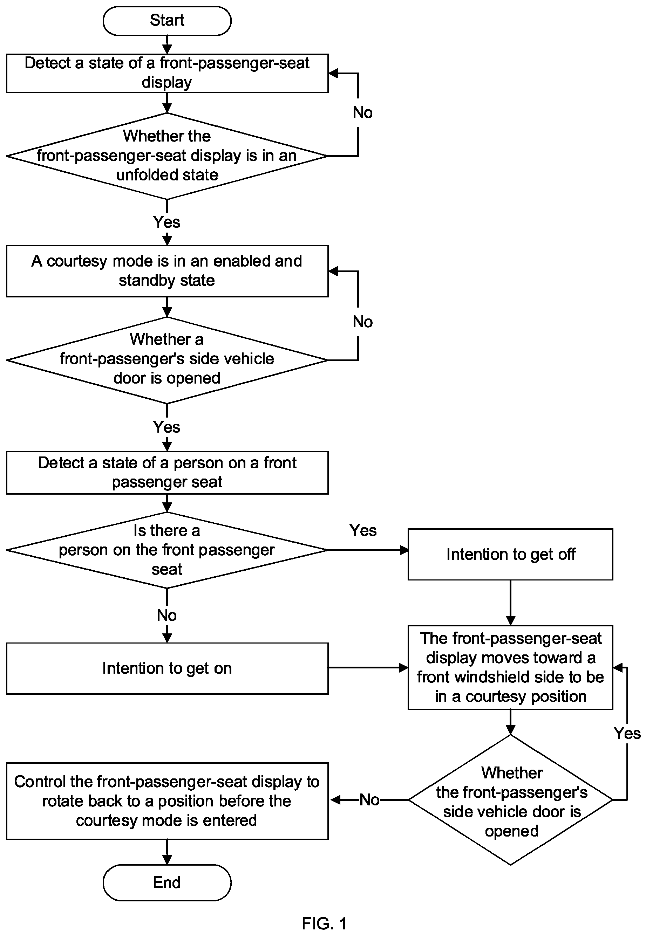

As shown in FIG. 1, in this embodiment, a vehicle front-passenger-seat display courtesy mode control method is provided. A front-passenger-seat display is capable of being rotatably disposed on a roof of a vehicle front-passenger's side, the front-passenger-seat display has a courtesy mode, and the method includes the following steps:

when the front-passenger-seat display is in an unfolded state, controlling the courtesy mode of the front-passenger-seat display to be in an enabled (also referred as on) and standby state; and when it is detected that a vehicle door is opened and it is identified that a front passenger has an intention to get off or a passenger has an intention to take a front passenger seat, activating the courtesy mode of the front-passenger-seat display, and controlling the front-passenger-seat display to move toward a front windshield side to be in an avoidance position; and when the front-passenger-seat display is in the courtesy mode, in response to detecting that the front-passenger's side vehicle door is in a closed state (which indicates that the front passenger has been seated), controlling the front-passenger-seat display to move to a position before the courtesy mode is activated, exiting the courtesy mode, and entering a state in which the courtesy mode is in the enabled and standby state.

In this embodiment, the front-passenger-seat display is capable of being rotatably disposed on the roof of the vehicle front-passenger's side, to ensure that the front passenger has an optimal watching angle during watching. When a user takes a front passenger seat or leaves a front passenger seat position, the front-passenger-seat display is controlled to rotate toward the front windshield side to be in the avoidance position, to protect safety of the front passenger (that is, prevent the passenger from bumping the head) and the front-passenger-seat display (that is, prevent the front-passenger-seat display from being damaged). After the front passenger completely leaves the front passenger seat, the front-passenger-seat display is controlled to return to the position before the courtesy mode is entered, to facilitate watching by the front passenger, thereby improving intelligence of a vehicle.

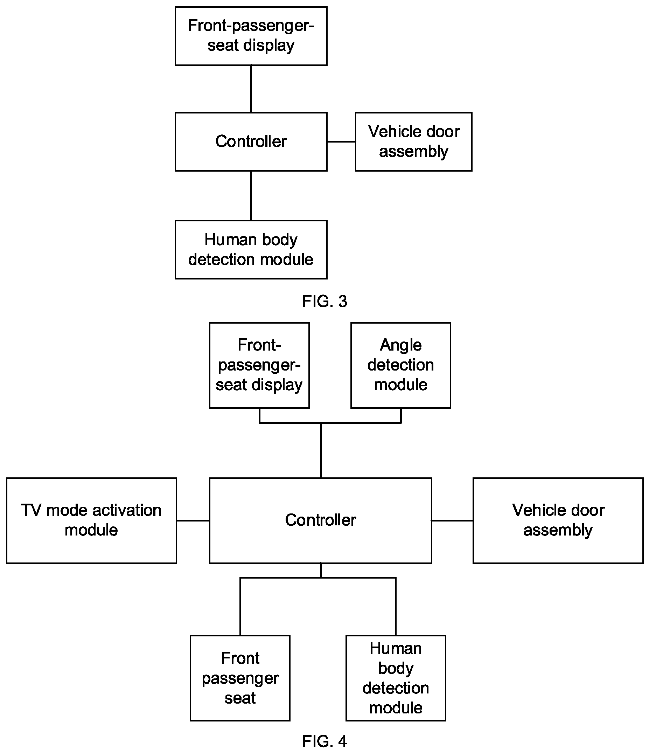

As shown in FIG. 3, in this embodiment, a vehicle front-passenger-seat display courtesy mode control system is provided, including a front-passenger-seat display, a vehicle door assembly, a human body detection module, and a controller. The front-passenger-seat display has a courtesy mode, and the front-passenger-seat display is capable of being rotatably disposed on a roof of a vehicle front-passenger's side. The vehicle door assembly is configured to output vehicle door status information. The human body detection module is configured to detect whether there is a person on a front passenger seat. The controller is separately connected to the front-passenger-seat display, the vehicle door assembly, and the human body detection module. The controller can perform the steps of the vehicle front-passenger-seat display courtesy mode control method described in this embodiment.

In this embodiment, the human body detection module may be a camera that can detect an area in which the front passenger seat is located, or may be a pressure sensor installed on the front passenger seat, or the like.

In this embodiment, an example in which the human body detection module is a camera is used below to describe a method for identifying whether the front passenger has an intention to get off and an intention to get on.

When a received vehicle door state sent by the vehicle door assembly is an opened state, a camera installed in the vehicle identifies whether there is a person on the front passenger seat. If the camera identifies a person in the vehicle, it is considered that the front passenger has an intention to get off.

When a received vehicle door state sent by the vehicle door assembly is an opened state, a camera installed in the vehicle identifies whether there is a person on the front passenger seat. If the camera identifies no person in the vehicle, it is considered that the front passenger has an intention to get on.

In this embodiment, the camera can be integrated into the front-passenger-seat display, and the camera cannot be seen when the front-passenger-seat display is a screen-on state and a screen-off state.

In this embodiment, the front-passenger-seat display includes a sun shading display module and a first control unit connected to the sun shading display module.

In this embodiment, the controller may use an in-vehicle infotainment controller of an in-vehicle infotainment system (including a voice recognition module), and the in-vehicle infotainment controller is connected to the first control unit of the front-passenger-seat display through a CAN bus. The first control unit is connected to a rotating mechanism of the front-passenger-seat display through a hard line. The first control unit controls the rotating mechanism of the front-passenger-seat display to work, to implement rotation of the front-passenger-seat display.

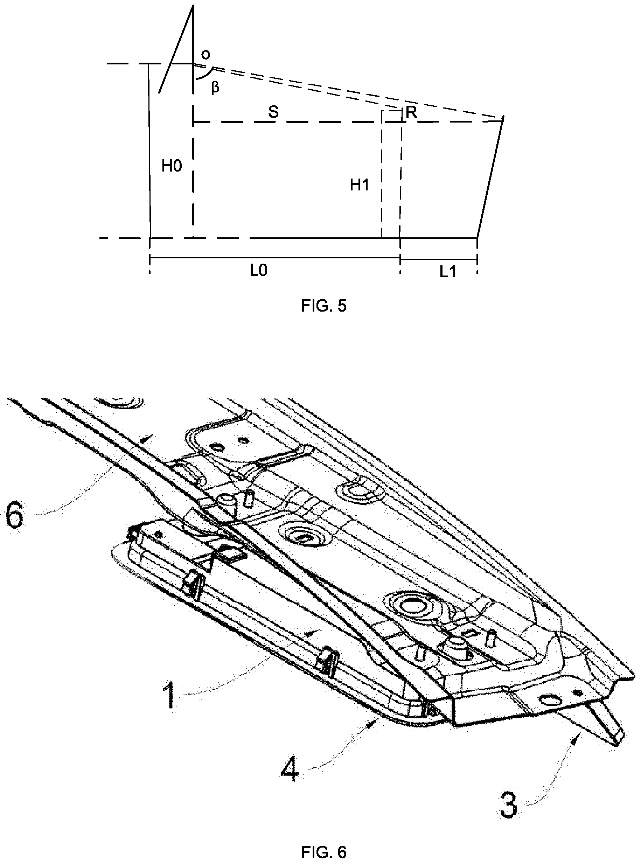

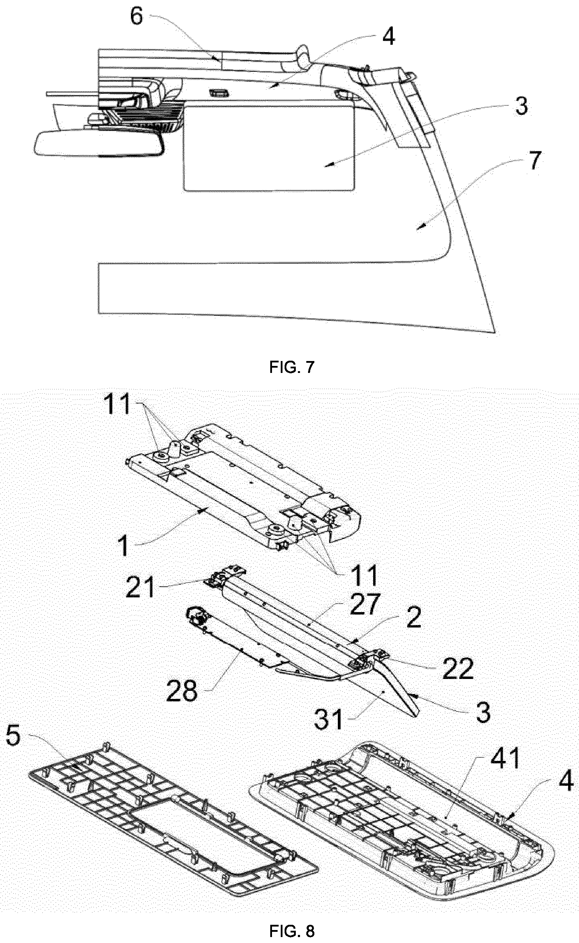

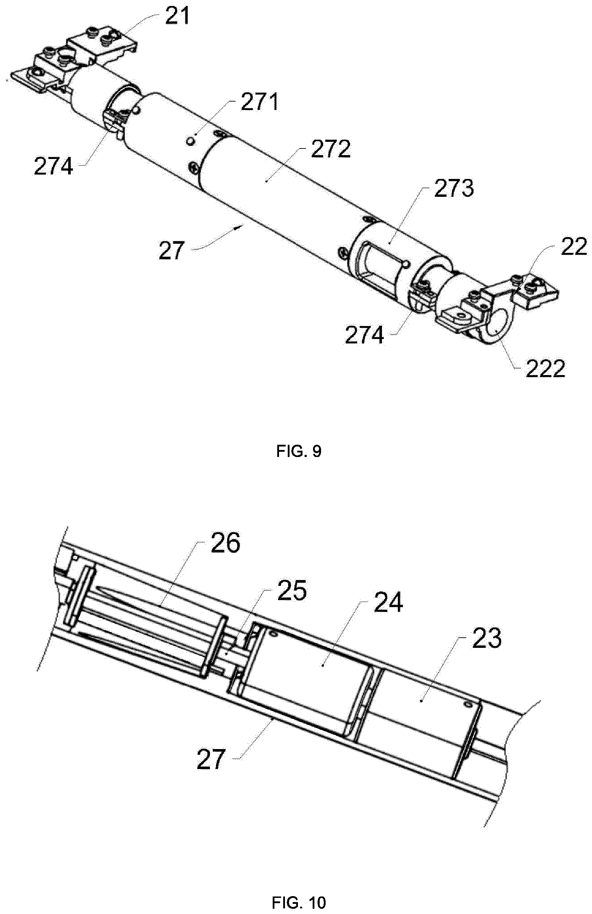

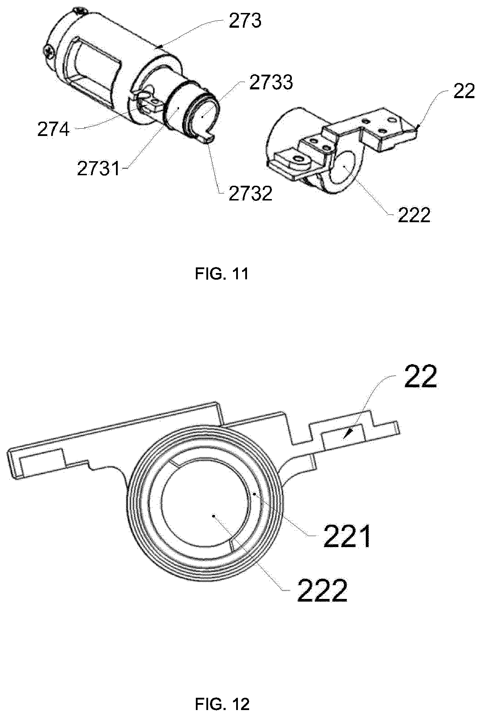

As shown in FIG. 6 to FIG. 12, in this embodiment, the sun shading display module includes a module base 1, a rotating mechanism 2, a display 3, and a module housing 4. A mounting structure 11 configured to be connected to a vehicle front roof crossmember 6 is disposed on an upper part of the module base 1. A lower part of the module base 1 is connected to the module housing 4, and a cavity is formed between the lower part of the module base 1 and the module housing 4. The rotating mechanism 2 includes a fastened assembly, an electric drive assembly, and a mechanism housing 27, the fastened assembly is fastened in the cavity, the electric drive assembly is connected to the fastened assembly, and the electric drive assembly can drive the mechanism housing 27 to rotate. An avoidance groove 41 is provided at a position that is on the module housing 4 and that corresponds to the mechanism housing 27, the mechanism housing 27 protrudes from the avoidance groove 41, and one end of the display 3 is connected to the mechanism housing 27. The mounting structure 11 includes two positioning pins and four bolt connecting holes.

The module base 1 is connected to the vehicle front roof crossmember 6 by using the mounting structure 11, so that the vehicle sun shading apparatus can be mounted in front of and above the front passenger seat. When the vehicle sun shading apparatus is not in use, the display 3 faces the module housing 4 in a horizontal posture. When the front passenger has a sun shading requirement, for example, the vehicle is driving in strong sunlight, the electric drive assembly can drive the mechanism housing 27 to rotate, and the mechanism housing 27 drives the display 3 to rotate, so that the display 3 rotates in a direction close to a front windshield 7 and does not hover until rotating to an angle at which sunlight can be shaded. In this case, sunlight radiation can be reduced, and the front passenger can be prevented from direct strong light, improving riding comfort of the front passenger. When the front passenger has an audio/video entertainment requirement, the electric drive assembly can drive the mechanism housing 27 to rotate, and the mechanism housing 27 drives the display 3 to rotate, so that the display 3 rotates in the direction close to the front windshield 7 and does not hover until rotating to an angle suitable for watching. In this case, the audio/video entertainment requirement of the front passenger can be met, increasing functional diversity and practicality of the vehicle sun shading apparatus.

In this embodiment, the fastened assembly includes a master pin boss 21 and a slave pin boss 22 that are respectively disposed on two sides of left and right sides of the mechanism housing 27. The master pin boss 21 and the slave pin boss 22 are separately connected to the mechanism housing 27 by using a screw.

In this embodiment, the electric drive assembly includes a motor 23, a gear box 24, and a main shaft 25 that are sequentially drivingly connected to each other. An end that is of the main shaft 25 and that is away from the gear box 24 is fastened to the master pin boss 21, and both the motor 23 and the gear box 24 are fastened to an inner wall of the mechanism housing 27. The mechanism housing 27 is hollow inside, and can be configured to accommodate the motor 23, the gear box 24, and a damper 26. The gear box 24 can convert a high rotational speed and low torque output by the motor 23 into a low rotational speed and high torque. When the motor 23 works, power of the motor 23 is sequentially transmitted to the gear box 24 and the main shaft 25, so that the main shaft 25 rotates relative to the motor 23 and the gear box 24. However, after the main shaft 25 is fastened to the master pin boss 21, the main shaft 25 cannot rotate. Therefore, when the motor 23 works, the motor 23 and the gear box 24 are enabled to rotate relative to the main shaft 25 and the master pin boss 21. Both the motor 23 and the gear box 24 are fastened to the mechanism housing 27. Therefore, when the motor 23 works, the mechanism housing 27 can be driven to rotate relative to the master pin boss 21, so that the display 3 moves relative to the master pin boss 21 and the module housing 4.

In this embodiment, the electric drive assembly further includes the damper 26, and the damper 26 is configured to increase a friction force existing when the mechanism housing 27 and the main shaft 25 rotate relative to each other. Increasing the friction force existing when the mechanism housing 27 and the main shaft 25 rotate relative to each other can enable the mechanism housing 27 to stably rotate.

In this embodiment, the mechanism housing 27 includes a left sleeve 271, a middle sleeve 272, and a right sleeve 273 that are sequentially connected. A left-side rotating shaft is disposed at a left end of the left sleeve 271, a master mounting hole is provided on the master pin boss 21, and the left-side rotating shaft can be connected to the master mounting hole through rotation. A right-side rotating shaft 2731 is disposed at a right end of the right sleeve 273, a slave mounting hole 222 is provided on the slave pin boss 22, and the right-side rotating shaft 2731 can be connected to the slave mounting hole 222 through rotation. This structure setting can ensure that the mechanism housing 27 can rotate relative to the fastening assembly.

In this embodiment, a rotation limiting member 2732 is disposed on the right-side rotating shaft 2731, and a rotation limiting groove 221 configured to fit the rotation limiting member 2732 is disposed in the slave pin boss 22. The rotation limiting member 2732 is inserted into the rotation limiting groove 221, so that a rotation angle of right-side rotation can be limited. In a process in which the rotation limiting member 2732 rotates from a position at which the rotation limiting member 2732 abuts against a head end of the rotation limiting groove 221 to a position at which the rotation limiting member 2732 abuts against a tail end of the rotation limiting groove 221, the right-side rotating shaft 2731 rotates by 170°.

In this embodiment, the left sleeve 271 and the right sleeve 273 each are provided with a mounting lug 274 connected to the display 3. After the display 3 is connected to the two mounting lugs 274, the display 3 can rotate synchronously with the left sleeve 271 and the right sleeve 273.

In this embodiment, the electric drive assembly further includes a circuit board 28 disposed in the cavity, and the circuit board 28 is connected to the module housing 4. A harness via 2733 is provided inside the right-side rotating shaft 2731, and a harness of the circuit board 28 passes through the slave mounting hole 222 and the harness via 2733, and is connected to the motor 23.

In this embodiment, a decorative panel 5 disposed in the cavity is further included, and the decorative panel 5 is connected to the module base 1. The decorative panel 5 can be configured to shield a bolt used at a connection between the module base 1 and the vehicle front roof crossmember 6.

In this embodiment, a specular reflection film 31 is disposed on the display 3. When the display 3 is in a screen-on state, the specular reflection film 31 can normally transmit light, and does not affect watching by the front passenger. When the front passenger has a makeup mirror requirement, the electric drive assembly can drive the mechanism housing 27 to rotate, and the mechanism housing 27 drives the display 3 to rotate, so that the display 3 rotates in the direction close to the front windshield 7 and does not hover until rotating to an angle at which the display 3 faces the front passenger. The display 3 is in a screen-off state. In this case, the display 3 with the specular reflection film 31 can serve as a makeup mirror to meet the makeup mirror requirement of the front passenger.

In this embodiment, a vehicle is provided, using the vehicle front-passenger-seat display courtesy mode control system described in this embodiment.

In this embodiment, a storage medium is provided. The memory stores a computer-readable program, and when the computer-readable program is invoked, the steps of the vehicle front-passenger-seat display courtesy mode control method described in this embodiment can be performed.

**Embodiment 2**

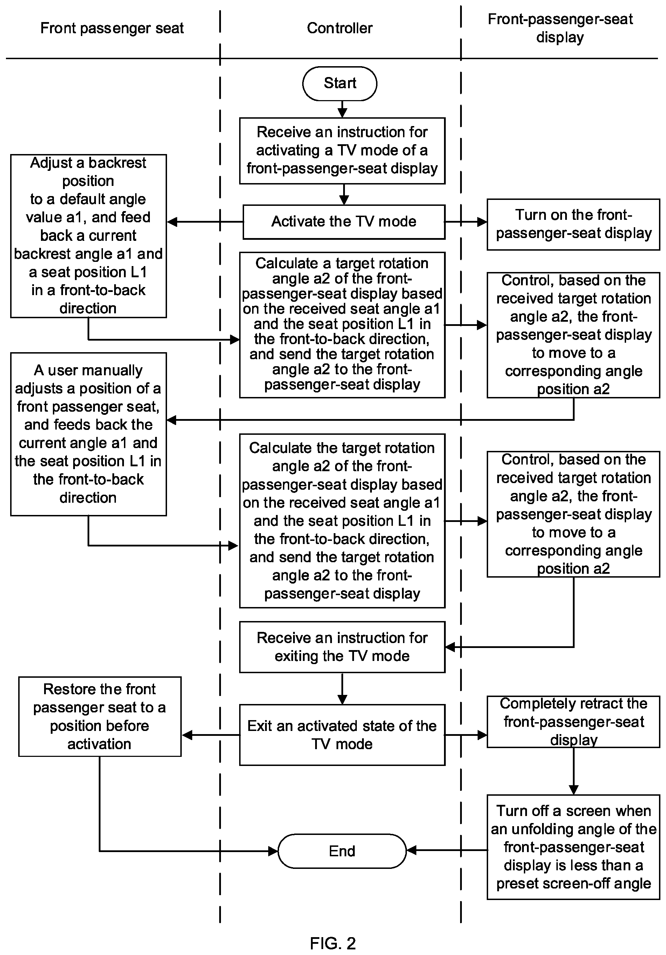

As shown in FIG. 2, in this embodiment, in a method for a vehicle front-passenger-seat display courtesy mode, the front-passenger-seat display further has a TV mode. The front passenger seat includes a seat and a second control unit that controls a backrest angle and front-rear position adjustment of the seat, and the second control unit establishes a communication connection to a controller.

As shown in FIG. 2, when the TV mode of the front-passenger-seat display is not activated, in response to that an instruction for activating the TV mode of the front-passenger-seat display is received, the front passenger seat is controlled to move to a seat position Ps1 memorized in the TV mode. The seat position Ps1 includes a position L1 of the front passenger seat in the front-to-back direction and a backrest angle a1. A target rotation angle a2 of the front-passenger-seat display is calculated based on the seat position Ps1 of the front passenger seat. The front-passenger-seat display is controlled, based on the target rotation angle of the front-passenger-seat display, to rotate to a target position, and the front-passenger-seat display is controlled to be turned on to enter the TV mode. In other words, after a user enables a TV mode function, a vehicle automatically controls the front passenger seat and the front-passenger-seat display to move, and enables a position of the front passenger seat to match an unfolding angle of the front-passenger-seat display, so that the front passenger rests at a comfortable position and watches the front-passenger-seat display. In this manner, comfort of a user at the front passenger seat is improved.

In this embodiment, before the front passenger seat moves to the seat position Ps1 memorized in the TV mode, if it is detected that the front passenger seat stops moving (for example, it is detected that an adjustment switch of the front passenger seat is pressed down and the front passenger seat stops moving), the TV mode of the front-passenger-seat display exits.

As shown in FIG. 5, in this embodiment, that the target rotation angle a2 of the front-passenger-seat display is calculated based on the seat position Ps1 of the front passenger seat is specifically as follows:

The position L1 and the backrest angle a1 of the front passenger seat in the front-to-back direction are obtained, and the target rotation angle a2 of the front-passenger-seat display is calculated. A calculation formula is as follows:

$$a2 = 90° + (90° - \beta);$$

$$\beta = \text{actan}(S/(H0 - H1*\cos(a1)));$$

$$S = L0 + L1 + H1*\sin(a1).$$

Herein, S is a horizontal distance between a backrest headrest position R of the front passenger seat and the front-passenger-seat display in a vertical state; β is an included angle between a rotating screen of the front-passenger-seat display in the vertical state and a line of sight of a person on the front passenger seat; H0 is a vertical distance between a front-passenger-seat display center position of the front-passenger-seat display in the vertical state and a seat surface of the front passenger seat; H1 is a distance between the backrest headrest position R of the front passenger seat in a vertical state of a backrest and a seat surface; and L0 is a horizontal distance between a zero position of the front passenger seat and the front-passenger-seat display in the vertical state. If the calculated target rotation angle a2 is greater than or equal to a maximum unfolding angle βmax, the front-passenger-seat display is adjusted to the maximum unfolding angle βmax.

If it is detected that the seat position is adjusted when the front-passenger-seat display is in the TV mode, the position L1 and the backrest angle a1 of the adjusted front passenger seat in the front-to-back direction are re-obtained. The target rotation angle a2 of the front-passenger-seat display is recalculated based on the position L1 and the backrest angle a1 of the adjusted front passenger seat in the front-to-back direction, and the front-passenger-seat display is controlled, based on the target rotation angle a2 of the front-passenger-seat display, to rotate to the target position. In this way, it is ensured that the front passenger is in a best watching state in real time.

In this embodiment, when an exit instruction or a voice exit instruction sent by a TV mode disable button disposed on an in-vehicle infotainment screen is received, the TV mode exits, and the front-passenger-seat display is controlled to rotate to a retracted position.

In this embodiment, when the front-passenger-seat display is in the TV mode, in response to detecting that the unfolding angle of the front-passenger-seat display is less than a preset screen-off angle (for example, 30°), the front-passenger-seat display is controlled to be turned off, to save energy and reduce consumption.

In this embodiment, the TV mode of the front-passenger-seat display is activated in a plurality of manners, for example, button-based triggering, voice-based triggering, adjustment of the unfolding angle of the front-passenger-seat display, and adjustment of the unfolding angle of the front-passenger-seat display.

Button-based triggering: When the TV mode of the front-passenger-seat display is not activated, the instruction for activating the TV mode of the front-passenger-seat display is sent in response to detecting that a TV mode activation button is triggered.

Voice-based triggering: When the TV mode of the front-passenger-seat display is not activated, the instruction for activating the TV mode of the front-passenger-seat display is sent in response to that a voice instruction for enabling the front-passenger-seat display to enter the TV mode is received. For example, after the user says "enable the TV mode", the in-vehicle infotainment system actively asks the user, through voice, "whether to enable the TV mode". If an answer of "yes" is detected, the in-vehicle infotainment system controls the front-passenger-seat display to rotate to a position of the TV mode, to help the user watch a video. If another answer is detected, the vehicle does not perform any operation.

Adjustment of the unfolding angle of the front-passenger-seat display: When the TV mode of the front-passenger-seat display is not activated, and it is detected that the unfolding angle of the front-passenger-seat display is greater than a first preset angle value (which indicates that the user may have an intention to watch a video), information about determining whether to enable the TV mode of the front-passenger-seat display is sent, and the instruction for activating the TV mode of the front-passenger-seat display is sent when information about determining to enable the TV mode of the front-passenger-seat display is received.

Adjustment of the unfolding angle of the front-passenger-seat display is specifically as follows: When the TV mode of the front-passenger-seat display is not activated, in response to detecting that the backrest angle of the front passenger seat is greater than a second preset angle value (which indicates that the user may have an intention to have a rest), information about determining whether to enable the TV mode of the front-passenger-seat display is sent (for example, the in-vehicle infotainment system actively asks the user, through voice, "whether to enable the TV mode"), and the instruction for activating the TV mode of the front-passenger-seat display is sent when information about determining to enable the TV mode of the front-passenger-seat display is received.

As shown in FIG. 4, in this embodiment, a vehicle front-passenger-seat display courtesy mode control system is provided, including a front-passenger-seat display, a vehicle door assembly, a human body detection module, a TV mode activation module, an angle detection module, a front passenger seat, and a controller. The front-passenger-seat display has a courtesy mode, and the front-passenger-seat display is capable of being rotatably disposed on a roof of a vehicle front-passenger's side. The vehicle door assembly is configured to output vehicle door status information. The human body detection module is configured to detect whether there is a person on the front passenger seat. The TV mode activation module is configured to send an instruction for activating a TV mode of the front-passenger-seat display. The angle detection module is configured to collect a rotation angle of the front-passenger-seat display. The front passenger seat includes a seat and a second control unit that controls a backrest angle and position adjustment in a front-to-back direction. The controller is separately connected to the front-passenger-seat display, the vehicle door assembly, the human body detection module, the TV mode activation module, the angle detection module, and the front passenger seat. The controller can perform the steps of the vehicle front-passenger-seat display courtesy mode control method described in this embodiment.

In this embodiment, the in-vehicle infotainment controller is connected to the second control unit of the front passenger seat through a CAN bus. The second control unit is connected to a movement actuator of the front passenger seat through a hard line. The second control unit controls the movement actuator of the front passenger seat to work, to implement a backrest adjustment and a front-rear position adjustment of the seat.

In this embodiment, the angle detection module is an angle sensor, and a real-time rotation angle of the front-passenger-seat display is detected by using the angle sensor. The angle information is returned to the controller in real time.

In this embodiment, a vehicle is provided, using the vehicle front-passenger-seat display courtesy mode control system described in this embodiment.

In this embodiment, a storage medium is provided. The memory stores a computer-readable program, and when the computer-readable program is invoked, the steps of the vehicle front-passenger-seat display courtesy mode control method described in this embodiment can be performed.

The remaining parts are the same as those in Embodiment 2.

It should be noted that the storage medium illustrated in the foregoing embodiments may be a computer-readable signal medium, a computer-readable storage medium, or any combination thereof.

The foregoing embodiments are preferred implementations of the present invention. However, the implementations of the present invention are not limited to the foregoing embodiments. Any other change, modification, substitution, combination, and simplification without departing from the principle of the present invention shall be equivalent replacement manners, and shall be included in the protection scope of the present invention.

**Claims**

1. A vehicle front-passenger-seat display courtesy mode control method, wherein a front-passenger-seat display is capable of being rotatably disposed on a roof of a vehicle front-passenger's side, the front-passenger-seat display has a courtesy mode, and the method comprises:

   when the front-passenger-seat display is in an unfolded state, controlling the courtesy mode of the front-passenger-seat display to be in an enabled and standby state; and when it is detected that a vehicle door is opened and it is identified that a front passenger has an intention to get off or a passenger has an intention to take a front passenger seat, activating the courtesy mode of the front-passenger-seat display, and controlling the front-passenger-seat display to move toward a front windshield side to be in an avoidance position; and
   when the front-passenger-seat display is in the courtesy mode, in response to detecting that the front-passenger's side vehicle door is in a closed state, controlling the front-passenger-seat display to move to a position before the courtesy mode is activated, exiting the courtesy mode, and entering a state in which the courtesy mode is in the enabled and standby state.

2. The vehicle front-passenger-seat display courtesy mode control method according to claim 1, wherein the avoidance position has a maximum unfolding angle βmax of the front-passenger-seat display.

3. A vehicle front-passenger-seat display courtesy mode control system, comprising:

   a front-passenger-seat display, wherein the front-passenger-seat display has a courtesy mode, and the front-passenger-seat display is capable of being rotatably disposed on a roof of a vehicle front-passenger's side;
   a vehicle door assembly, configured to output vehicle door status information;
   a human body detection module, configured to detect whether there is a person on a front passenger seat; and
   a controller, wherein the controller is separately connected to the front-passenger-seat display, the vehicle door assembly, and the human body detection module, wherein
the controller is capable of performing the vehicle front-passenger-seat display courtesy mode control method according to claim 1 or 2.

4. A vehicle, using the vehicle front-passenger-seat display courtesy mode control system according to claim 3.

5. A storage medium, wherein the memory stores a computer-readable program, and the computer-readable program is invoked to perform the vehicle front-passenger-seat display courtesy mode control method according to claim 1 or 2.

EP 4 559 757 A1

```
                    ┌─────────────┐
                    │    Start    │
                    └──────┬──────┘
                           │
         ┌─────────────────▼─────────────────┐
         │ Detect a state of a front-passenger-seat │◄──────┐
         │              display              │       │
         └─────────────────┬─────────────────┘       │
                           │                         │ No
              ╱────────────▼────────────╲            │
             ╱      Whether the          ╲───────────┘
             ╲ front-passenger-seat display is in an ╱
              ╲       unfolded state      ╱
               ╲────────────┬────────────╱
                           │ Yes
         ┌─────────────────▼─────────────────┐
         │ A courtesy mode is in an enabled and │◄──────┐
         │          standby state          │       │
         └─────────────────┬─────────────────┘       │ No
              ╱────────────▼────────────╲            │
             ╱      Whether a            ╲───────────┘
             ╲ front-passenger's side vehicle ╱
              ╲      door is opened       ╱
               ╲────────────┬────────────╱
                           │ Yes
         ┌─────────────────▼─────────────────┐
         │ Detect a state of a person on a front │
         │          passenger seat          │
         └─────────────────┬─────────────────┘
              ╱────────────▼────────────╲     Yes   ┌──────────────────┐
             ╱      Is there a           ╲─────────►│ Intention to get off │
             ╲ person on the front passenger ╱      └─────────┬────────┘
              ╲         seat             ╱                   │
               ╲────────────┬────────────╱                   │
                           │ No                              ▼
         ┌─────────────────▼─────────────────┐   ┌──────────────────────┐
         │      Intention to get on       ├──►│ The front-passenger-seat │◄─┐
         └───────────────────────────────────┘   │ display moves toward a │  │
                                                 │ front windshield side to be │  │ Yes
                                                 │   in a courtesy position │  │
                                                 └───────────┬──────────┘  │
                                                            │             │
                                                 ╱──────────▼──────────╲   │
         ┌─────────────────────────────────┐     ╱     Whether        ╲──┘
         │ Control the front-passenger-seat display to │◄── No ──╲ the front-passenger's ╱
         │ rotate back to a position before the │     ╲ side vehicle door is ╱
         │    courtesy mode is entered     │      ╲    opened        ╱
         └─────────────────┬─────────────────┘       ╲──────────────╱
                           │
                    ┌──────▼──────┐
                    │     End     │
                    └─────────────┘
```

FIG. 1

10

| Front passenger seat | Controller | Front-passenger-seat display |
|---|---|---|

```
                          ╭─────────╮
                          │  Start  │
                          ╰─────────╯
                               │
                               ▼
                    ┌──────────────────────┐
                    │ Receive an instruction│
                    │ for activating a TV   │
                    │ mode of a front-       │
                    │ passenger-seat display │
                    └──────────────────────┘
                               │
                               ▼
┌──────────────────┐  ┌──────────────────┐  ┌──────────────────┐
│Adjust a backrest │◄─┤ Activate the TV  │  │ Turn on the front-│
│position           │  │ mode             │  │passenger-seat     │
│to a default angle │  └──────────────────┘  │display            │
│value a1, and feed │                        └──────────────────┘
│back a current     │  ┌──────────────────┐
│backrest angle a1  │  │Calculate a target │  ┌──────────────────┐
│and a seat position│  │rotation angle a2  │  │Control, based on  │
│L1 in a front-to-  │  │of the front-       │  │the received target│
│back direction     │─►│passenger-seat      │─►│rotation angle a2, │
└──────────────────┘  │display based on    │  │the front-passenger│
                      │the received seat   │  │-seat display to   │
┌──────────────────┐  │angle a1 and the    │  │move to a           │
│A user manually   │  │seat position L1 in │  │corresponding angle │
│adjusts a position│  │the front-to-back   │  │position a2         │
│of a front         │◄─│direction, and send │  └──────────────────┘
│passenger seat,    │  │the target rotation │
│and feeds back the │  │angle a2 to the     │  ┌──────────────────┐
│current angle a1   │  │front-passenger-    │  │Control, based on  │
│and the seat       │  │seat display        │  │the received target│
│position L1 in the │  └──────────────────┘  │rotation angle a2, │
│front-to-back      │  ┌──────────────────┐  │the front-passenger│
│direction          │  │Calculate the target│  │-seat display to   │
└──────────────────┘  │rotation angle a2  │─►│move to a           │
                      │of the front-       │  │corresponding angle │
                      │passenger-seat      │  │position a2         │
                      │display based on    │  └──────────────────┘
                      │the received seat   │
                      │angle a1 and the    │
                      │seat position L1 in │
                      │the front-to-back   │
                      │direction, and send │
                      │the target rotation │
                      │angle a2 to the     │
                      │front-passenger-    │
                      │seat display        │
                      └──────────────────┘
                               │
                      ┌──────────────────┐
                      │Receive an         │
                      │instruction for    │◄─
                      │exiting the TV mode │
                      └──────────────────┘
                               │
┌──────────────────┐  ┌──────────────────┐  ┌──────────────────┐
│Restore the front │◄─│Exit an activated │  │Completely retract │
│passenger seat to │  │state of the TV   │─►│the front-passenger│
│a position before │  │mode              │  │-seat display      │
│activation         │  └──────────────────┘  └──────────────────┘
└──────────────────┘                                  │
                                               ┌──────────────────┐
                                               │Turn off a screen  │
                          ╭─────────╮          │when an unfolding  │
                          │   End   │◄─────────│angle of the front-│
                          ╰─────────╯          │passenger-seat     │
                                               │display is less than│
                                               │a preset screen-off │
                                               │angle              │
                                               └──────────────────┘
```

FIG. 2

```
┌─────────────────────┐
│  Front-passenger-   │
│    seat display     │
└─────────────────────┘
          │
┌─────────────────────┐      ┌──────────────────┐
│     Controller      │──────│  Vehicle door    │
│                     │      │    assembly      │
└─────────────────────┘      └──────────────────┘
          │
┌─────────────────────┐
│    Human body       │
│  detection module   │
└─────────────────────┘
```

FIG. 3

```
┌──────────────┐   ┌──────────────┐
│    Front-    │   │    Angle     │
│  passenger-  │   │  detection   │
│ seat display │   │   module     │
└──────────────┘   └──────────────┘
        │                 │
┌──────────────┐   ┌──────────────────┐   ┌──────────────┐
│ TV mode      │   │                  │   │ Vehicle door │
│ activation   │───│   Controller     │───│  assembly    │
│ module       │   │                  │   │              │
└──────────────┘   └──────────────────┘   └──────────────┘
                          │
              ┌──────────┴──────────┐
        ┌──────────┐         ┌──────────────┐
        │  Front   │         │   Human      │
        │passenger │         │   body       │
        │  seat    │         │  detection   │
        │          │         │   module     │
        └──────────┘         └──────────────┘
```

FIG. 4

FIG. 5

FIG. 6

FIG. 7

FIG. 8

FIG. 9

FIG. 10

FIG. 11

FIG. 12

## INTERNATIONAL SEARCH REPORT

| International application No. |
| --- |
| **PCT/CN2023/121345** |

| A. | CLASSIFICATION OF SUBJECT MATTER |
| --- | --- |

B60R11/02(2006.01)i; B60N2/02(2006.01)n; B60J3/02(2006.01)n

According to International Patent Classification (IPC) or to both national classification and IPC

| B. | FIELDS SEARCHED |
| --- | --- |

Minimum documentation searched (classification system followed by classification symbols)

IPC:B60R11/-; B60N2/-; B60J3/-

Documentation searched other than minimum documentation to the extent that such documents are included in the fields searched

Electronic data base consulted during the international search (name of data base and, where practicable, search terms used)

CNABS; CNTXT; CNKI; VEN; USTXT: 深蓝汽车, 苏忠, 胡志强, 刘杰, 曾帅, 翟钧, 车, 副驾屏, 顶棚, 车顶, 自动, 主动, 转动, 运动, 移动, 避让, 礼让, 开门, 下车, 关门, 进入, vehicle, copilotscreen, ceiling, roof, automatic+, rotat+, mov+, comity, avoid+, door, open+, get-off, clos+, enter+

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 116039528 A (CHANG'AN NEW ENERGY NANJING RESEARCH INSTITUTE CO., LTD.) 02 May 2023 (2023-05-02)<br>claims, description, paragraphs 0013-0054, and figures 1-12 | 1-5 |
| PX | CN 116022039 A (CHANG'AN NEW ENERGY NANJING RESEARCH INSTITUTE CO., LTD.) 28 April 2023 (2023-04-28)<br>description, paragraphs 0023-0065, and figures 1-12 | 1-5 |
| PX | CN 116001535 A (CHANG'AN NEW ENERGY NANJING RESEARCH INSTITUTE CO., LTD.) 25 April 2023 (2023-04-25)<br>description, paragraphs 0019-0057, and figures 1-14 | 1-5 |
| PX | CN 116021967 A (CHANG'AN NEW ENERGY NANJING RESEARCH INSTITUTE CO., LTD.) 28 April 2023 (2023-04-28)<br>description, paragraphs 0016-0043, and figures 1-13 | 1-5 |
| A | JP 2011230684 A (SANYO ELECTRIC CO., LTD. et al.) 17 November 2011 (2011-11-17)<br>description, paragraphs 0019-0075, and figures 1-5 | 1-5 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **07 November 2023** | **13 November 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**EP 4 559 757 A1**

## INTERNATIONAL SEARCH REPORT

| | International application No. |
|---|---|
| | **PCT/CN2023/121345** |

### C. DOCUMENTS CONSIDERED TO BE RELEVANT

| Category* | Citation of document, with indication, where appropriate, of the relevant passages | Relevant to claim No. |
|---|---|---|
| A | CN 110316114 A (BYD CO., LTD.) 11 October 2019 (2019-10-11)<br>entire document | 1-5 |
| A | CN 113928253 A (CHONGQING CHANG'AN NEW ENERGY AUTOMOBILE TECHNOLOGY CO., LTD.) 14 January 2022 (2022-01-14)<br>entire document | 1-5 |
| A | JP 2007196886 A (TOYOTA MOTOR CORP.) 09 August 2007 (2007-08-09)<br>entire document | 1-5 |
| A | JP 2016124393 A (TOYOTA MOTOR CORP.) 11 July 2016 (2016-07-11)<br>entire document | 1-5 |
| A | KR 20050028506 A (HYUNDAI MOTOR CO., LTD.) 23 March 2005 (2005-03-23)<br>entire document | 1-5 |

Form PCT/ISA/210 (second sheet) (July 2022)

## INTERNATIONAL SEARCH REPORT
### Information on patent family members

| International application No. |
| --- |
| **PCT/CN2023/121345** |

| Patent document cited in search report | | | Publication date (day/month/year) | Patent family member(s) | | | Publication date (day/month/year) |
| --- | --- | --- | --- | --- | --- | --- | --- |
| CN | 116039528 | A | 02 May 2023 | CN | 116039528 | B | 04 July 2023 |
| CN | 116022039 | A | 28 April 2023 | CN | 116022039 | B | 09 June 2023 |
| CN | 116001535 | A | 25 April 2023 | CN | 116001535 | B | 13 June 2023 |
| CN | 116021967 | A | 28 April 2023 | CN | 116021967 | B | 13 June 2023 |
| JP | 2011230684 | A | 17 November 2011 | | None | | |
| CN | 110316114 | A | 11 October 2019 | WO | 2019184976 | A1 | 03 October 2019 |
| | | | | CN | 110316114 | B | 20 July 2021 |
| CN | 113928253 | A | 14 January 2022 | CN | 113928253 | B | 14 July 2023 |
| JP | 2007196886 | A | 09 August 2007 | | None | | |
| JP | 2016124393 | A | 11 July 2016 | JP | 6384322 | B2 | 05 September 2018 |
| KR | 20050028506 | A | 23 March 2005 | | None | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 110316114 B